(19) **Europäisches Patentamt**

**European Patent Office**

**Office européen des brevets**

(11) **EP 1 467 266 B1**

(12) **EUROPÄISCHE PATENTSCHRIFT**

(45) Veröffentlichungstag und Bekanntmachung des Hinweises auf die Patenterteilung:
**06.09.2006 Patentblatt 2006/36**

(51) Int Cl.:
***G05B 13/04*** *(2006.01)*

(21) Anmeldenummer: **04002643.7**

(22) Anmeldetag: **06.02.2004**

(54) **Verfahren zur Analyse eines Antriebssystems**

Method for analysing a drive system

Procédé pour analyser un système d'entraînement

(84) Benannte Vertragsstaaten:
**AT BE BG CH CY CZ DE DK EE ES FI FR GB GR HU IE IT LI LU MC NL PT RO SE SI SK TR**

(30) Priorität: **12.04.2003 DE 10316977**

(43) Veröffentlichungstag der Anmeldung:
**13.10.2004 Patentblatt 2004/42**

(73) Patentinhaber: **Etel S.A.**
**2112 Môtiers (CH)**

(72) Erfinder:
• **Mathia, Michel**
**2108 Couvet (CH)**

• **Very, Vincent**
**25130 Villers-le-lac (FR)**

(74) Vertreter: **Hofmann, Ernst**
**Dr. Johannes Heidenhain GmbH,**
**Patentabteilung,**
**Postfach 12 60**
**83292 Traunreut (DE)**

(56) Entgegenhaltungen:
**US-A- 5 553 153        US-A- 5 623 402**

**Beschreibung**

Die Erfindung betrifft ein Verfahren zur Analyse eines Antriebssystems. Solche Verfahren dienen dazu, ein Zielsystem innerhalb eines Antriebssystems einer speziellen Applikation zu analysieren. Anhand des Analyseergebnisses lassen sich z.B. optimierte Reglerparameter finden.

Die Anforderungen an moderne Antriebssysteme wachsen immer weiter an. So müssen beispielsweise in einem Bestückungsautomaten immer kleinere Bauteile immer genauer auf einer Platine platziert werden. Dabei steigt die Zahl der Bauteile pro Platinenfläche durch die Miniaturisierung immer weiter an, so daß auch die Geschwindigkeit der Bauteilpositionierung ständig steigen muß, um einen möglichst hohen Durchsatz an einer solchen Maschine zu erhalten. Höhere Positioniergenauigkeit bei gleichzeitig kürzeren Positionierzeiten sind eigentlich konträre Aufgaben, die sich nur durch optimal parametrierte Regelkreise in Verbindung mit hochwertigen Motoren und Positionsmeßsystemen lösen lassen.

Um jedoch die Parameter eines Regelkreises optimal einstellen zu können, ist eine möglichst genaue Kenntnis des Antriebssystems wichtig. Ein Werkzeug zur Analyse eines Antriebssystems ist die Ermittlung der Übertragungsfunktion des Antriebssystems bzw. eines Zielsystems innerhalb des Antriebssystems. Diese Übertragungsfunktion beschreibt, welche Dämpfung und welche Phasenverschiebung ein am Eingang des Zielsystems angelegtes Signal einer bestimmten Frequenz bis zum Ausgang erfährt. Die Ermittlung der Übertragungsfunktion des Antriebssystems bzw. des Zielsystems (auch Identifikation genannt) sollte möglichst für den geöffneten Regelkreis durchgeführt werden, da die Kenntnis der Übertragungsfunktion des Zielsystems bei geöffnetem Regelkreis eine Aussage über die Stabilität des Antriebssystems ermöglicht. In vielen Fällen ist ein Öffnen des Regelkreises aber nicht möglich. Dann muß eine Identifikation mit geschlossenem Regelkreis durchgeführt werden. Dies bedeutet, daß am Eingang des untersuchten Zielsystems nicht das zu Testzwecken angelegte Signal, sondern die Differenz aus dem angelegten Signal und dem gemessenen Istwert des geregelten Parameters anliegt.

Ein bekanntes Verfahren zur Identifikation eines Antriebssystems beruht darauf, am Eingang des Antriebssystems ein Rauschsignal anzulegen, das zumindest in allen für die jeweilige Applikation wichtigen Frequenzbereichen Signalanteile enthält. Ein Beispiel für eine solche Identifikation beschreibt die US 5,623,402. Es wird ein einzelnes Anregungssignal gebildet, das Anteile in verschiedenen für die Applikation wichtigen Frequenzbereichen enthält. In einem aufwändigen Verfahren wird dabei sicher gestellt, daß das Anregungssignal keine Anteile enthält, die zu einer Zerstörung des Antriebssystems führen könnten. Es muß nämlich bei der Anregung eines Antriebssystems mit Rauschsignalen darauf geachtet werden, daß in bestimmten Frequenzbereichen wesentlich stärkere Antworten (Resonanz) zu erwarten sind als in anderen Frequenzbereichen, die eher gedämpft werden.

Aufgabe der Erfindung ist es daher, ein Verfahren zu schaffen, mit dem in einfacher Weise die Identifikation eines Antriebssystems ermöglicht wird.

Diese Aufgabe wird gelöst durch ein Verfahren nach Anspruch 1 Vorteilhafte Details des Verfahrens ergeben sich aus den von Anspruch 1 abhängigen Ansprüchen.

Es wird ein Verfahren zur Analyse eines Antriebssystems beschrieben, nach dem eine Übertragungsfunktion eines Zielsystems innerhalb des Antriebssystems bestimmt wird, indem Rauschsignale an das Antriebssystem angelegt werden. Dabei werden nacheinander mehrere Rauschsignale als Eingangssignal angelegt, die unterschiedliche Frequenzbereiche abdecken.

Die Intensität der Rauschsignale kann dabei je nach abgedecktem Frequenzbereich schrittweise optimiert werden, um das Ergebnis der Identifikation des Zielsystems im Antriebssystem zu verbessern.

Weitere Vorteile sowie Einzelheiten der vorliegenden Erfindung ergeben sich aus der nachfolgenden Beschreibung einer bevorzugten Ausführungsform anhand der Figuren. Dabei zeigt

Figur 1    ein Antriebssystem mit geschlossenem Regelkreis;

Figur 2    Rauschsignale in einer ersten Variante;

Figur 3    Rauschsignale in einer zweiten Variante;

Figur 4    Verfahrensschritte zum Festlegen der Intensität der Rauschsignale;

Figur 5    ein Verfahren zur Analyse eines Antriebssystems.

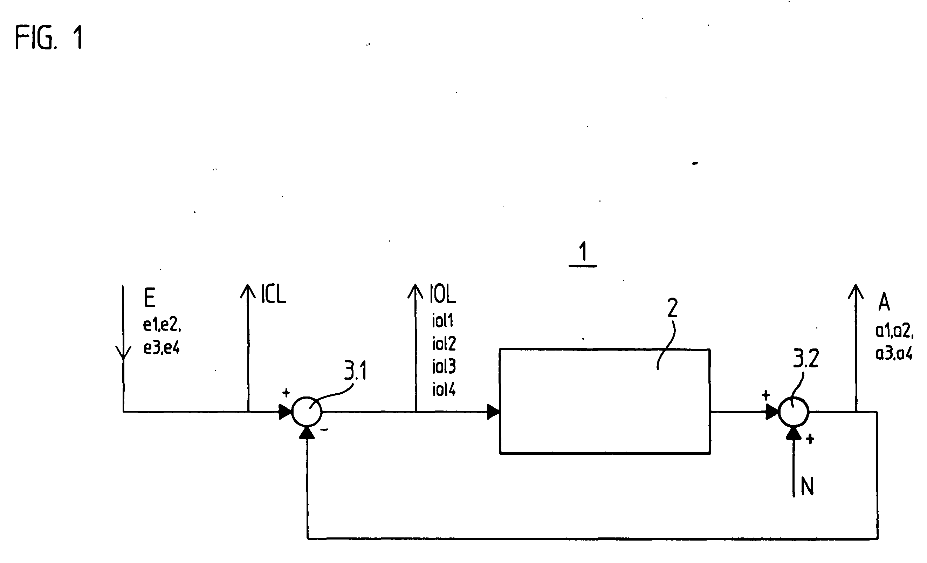

In Figur 1 ist in sehr allgemeiner Weise ein Blockschaltbild eines Antriebssystems 1 gezeigt. Vom Eingangssignal E wird an einer Additionsstelle 3.1 bei geschlossenem Regelkreis das Ausgangssignal A abgezogen. Die so gebildete Differenz IOL wird einem Zielsystem 2 im Antriebssystem 1 zugeführt. Die Übertragungsfunktion des Zielsystems 2 ist gesucht. Das Signal am Ausgang des Zielsystems 2 ist grundsätzlich nur mit einem überlagerten Umgebungsrauschen N zu bestimmen. Dies ist durch eine zweite Additionsstelle 3.2 angedeutet, an der das Umgebungsrauschen N aufgeschaltet ist. Das mit dem Umgebungsrauschen N beaufschlagte Ausgangssignal A wird auf die Additionsstelle 3.1 zurückgekoppelt.

Das Zielsystem 2 kann in einer typischen Applikation aus einer kaskadierten Reglerstruktur aus Lage-, Geschwindigkeits-, und Stromregler bestehen, die einen mit Pulsweitenmodulation betriebenen elektrischen Antrieb kontrolliert, der über eine Mechanik mit einem beweglichen Objekt verbunden ist. Das Eingangssignal E entspricht dann einer Sollposition des beweglichen Objektes. Am beweglichen Objekt mißt ein Positionsmeßgerät die tatsächliche Position und damit den Istwert des Objektes und gibt diese Position als Ausgangssignal A aus. Das Zielsystem 2 bildet nach dem vorliegenden Ausführungsbeispiel mit dem geschlossenen Positionsregelkreis das Antriebssystem 1. Die Differenz IOL stellt im Regelkreis die Abweichung des Istwertes vom Sollwert dar.

Will man die Übertragungsfunktion des Zielsystems 2 ermitteln, kann man in einem Bode-Diagramm die Dämpfung und Phasenverschiebung des Ausgangssignals A relativ zum am Eingang des Zielsystems 2 anliegenden Differenzsignal IOL gegen die Frequenz im zu untersuchenden Frequenzbereich auftragen. In einem solchen Bode-Diagramm lassen sich in bekannter Weise Stabilitätsreserven bzw. instabile Frequenzbereiche des Zielsystems 2 ablesen.

Die Übertragungsfunktion des geschlossenen Regelkreises läßt sich durch einen Vergleich des Signals ICL, das dem Eingangssignal E entspricht, mit dem Ausgangssignal A erhalten, indem auch hier wieder Dämpfung und Phasenverschiebung gegen den zu untersuchenden Frequenzbereich aufgetragen werden.

Im hier beschriebenen Verfahren werden dabei nacheinander unterschiedliche Eingangssignale E aufgeschaltet und die daraus resultierenden Ausgangssignale A ermittelt. Wenn das Verhalten im geschlossenen Regelkreis interessiert, wird jeweils die Dämpfung und Phasenverschiebung zwischen Eingangssignal E und Ausgangssignal A gegen die Frequenz aufgetragen, bei der Untersuchung der Übertragungsfunktion des Zielsystems 2 im offenen Regelkreis wird die Dämpfung und Phasenverschiebung zwischen der Differenz IOL und dem Ausgangssignal A gegen die Frequenz aufgetragen.

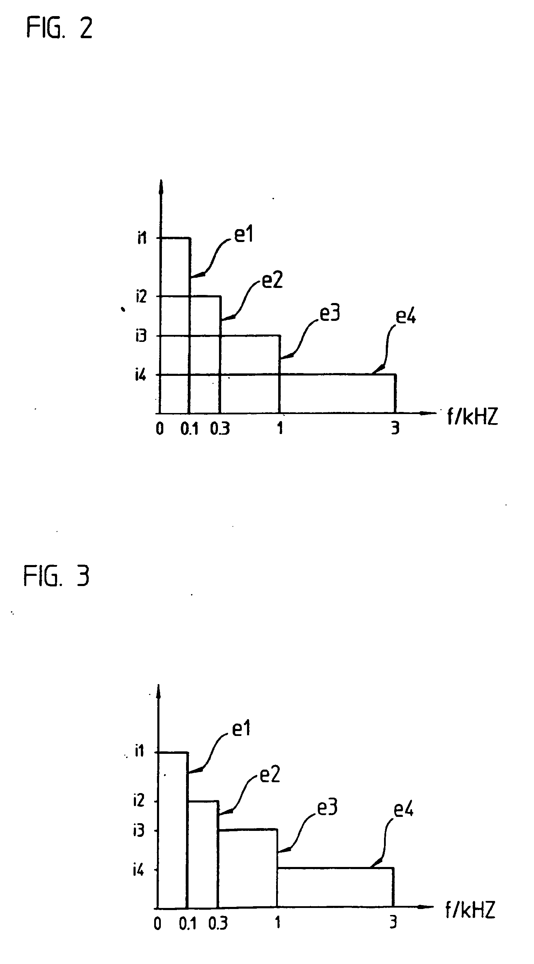

Als Eingangssignale E dienen dabei, wie in Figur 2 dargestellt, Rauschsignale e1 bis e4 mit unterschiedlichen Frequenzbereichen In einer typischen Applikation interessiert ein Frequenzbereich von 0 kHz bis 3 kHz. Um zu berücksichtigen, daß im vorliegenden Beispiel bei niedrigen Frequenzen die Dämpfung des Eingangssignals E bis zum Differenzsignal (IOL) am Eingang des Zielsystems 2 höher ist als bei hohen Frequenzen (Hochpaßverhalten), kann man die Intensität i1 - i4 der Rauschsignale e1 - e4, die lediglich niedrige Frequenzanteile enthalten, höher wählen als die Intensität i1 - i4 der Rauschsignale e1 - e4, die höhere Frequenzanteile enthalten. So ist die Intensität i1 des Rauschsignals e1, das lediglich Frequenzen zwischen 0 kHz und 0.1 kHz enthält, deutlich höher als die Intensität i4 des Rauschsignals e4, das Frequenzen zwischen 0 kHz und 3 kHz enthält.

Eine alternative Einteilung der Frequenzbereiche zeigt Figur 3, nach der der interessierende Frequenzbereich in nicht oder nur wenig überlappende Frequenzbänder aufgeteilt ist. Wieder erhält das Rauschsignal e1, das einen niedrigen Frequenzbereich abdeckt, eine höhere Intensität i1 als das Rauschsignal e4, das einen hohen Frequenzbereich abdeckt.

Sowohl die Anzahl der Rauschsignale e1 - e4 als auch der abgedeckte Frequenzbereich und die einzelnen Grenzfrequenzen sind natürlich nur als Beispiel zu verstehen und müssen der jeweiligen Applikation angepaßt werden. Es sind auch unregelmäßige Einteilungen mit teilweiser Überlappung der einzelnen Frequenzbereiche der Rauschsignale e1 - e4 möglich.

Für die Identifikation von anderen Zielsystemen 2 innerhalb des Antriebssystems 1, bei denen das Eingangssignal E einer Tiefpaßfilterung bis zum Eingang des Zielsystems 2 unterliegt, kann die Intensitätsverteilung auch umgekehrt werden In Figur 3 hätte dann das Rauschsignal e4 im höchsten Frequenzbereich die höchste Intensität i4, das Rauschsignal e1 im niedrigsten Frequenzbereich die niedrigste Intensität i1. Wird als Zielsystem 2 etwa die mechanische Kopplung des beweglichen Objekts mit dem elektrischen Antrieb untersucht, so unterliegt das am Zielsystem 2 anliegende Signal, nämlich die vom elektrischen Antrieb ausgeübte Kraft, üblicherweise einer Tiefpaßfilterung bezogen auf das am Eingang des Antriebsystems 1 angelegte Signal E.

Grundsätzlich sollten Rauschsignale e1 - e4, die vom Eingang des Antriebsystems 1 bis zum Eingang des Zielsystems 2 stärker gedämpft werden, mit einer höheren Intensität am Antriebssystem 1 angelegt werden. Dies verbessert den Abstand des Ausgangssignals A des Zielsystems 2 vom Umgebungsrauschen N.

Die Intensität i1 - i4 der einzelnen Rauschsignale e1 - e4 darf einerseits nicht zu niedrig sein, um einen ausreichenden Abstand der jeweiligen Ausgangssignale a1 - a4 vom Umgebungsrauschen N zu gewährleisten, andererseits kann die Intensität i1 - i4 auch nicht beliebig hoch gewählt werden, da im Zielsystem 2 verschiedene Parameter limitiert sind. Im beschriebenen Beispiel kann dies etwa ein maximaler Strom im elektrischen Antrieb und eine maximale Geschwindigkeit des beweglichen Objektes sein.

Es wird daher ein Verfahren zum Festlegen der Intensität i1 - i4 der Rauschsignale e1 - e4 beschrieben. Ausgehend von der beispielhaften Festlegung, daß der Strom im Antrieb maximal 60% seines Sättigungswertes erreichen sollte und die maximale Geschwindigkeit bei höchstens 80% der erlaubten Geschwindigkeit liegen sollte, werden entsprechende Grenzwerte Cgrenz für den Strom und Vgrenz für die Geschwindigkeit festgelegt.

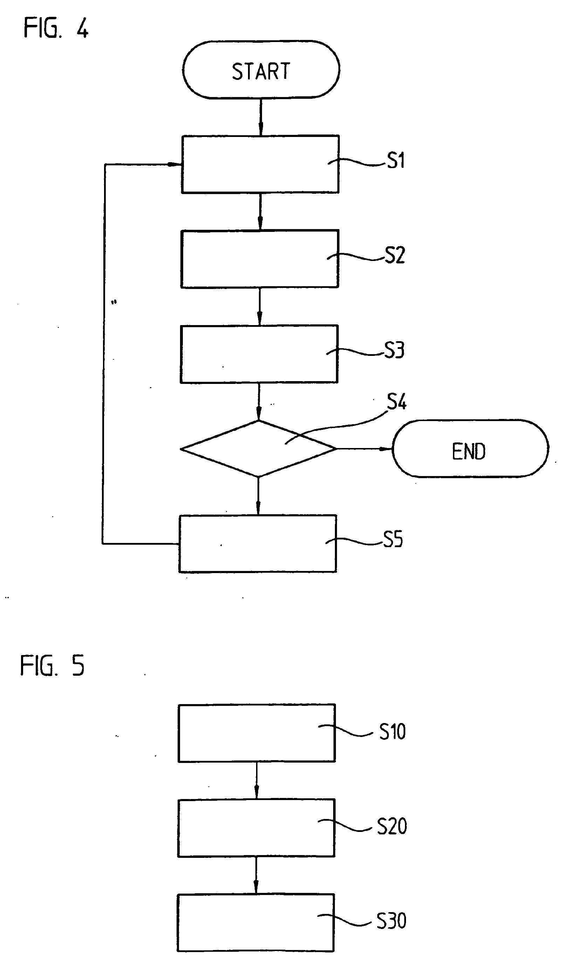

Anhand von Figur 4 wird nun ein Verfahren zum Festlegen der Intensität i1 für das erste Rauschsignal e1 stellvertretend für alle weiteren Rauschsignale e2 - e4 beschrieben.

Im ersten Schritt S1 wird das Rauschsignal e1 für eine bestimmte Zeit (z.B. 500 ms) als Eingangsignal E angelegt. Die in dieser Zeit auftretenden Maximalwerte des Stromes Cmax und der Geschwindigkeit Vmax werden dabei erfaßt. Die Intensität i1 des Rauschsignals e1 wird dabei zunächst so niedrig gewählt, daß sicher keiner der Grenzwerte Cgrenz und Vgrenz erreicht wird, also

$$Cmax \ll Cgrenz$$

und

$$Vmax \ll Vgrenz.$$

Im zweiten Schritt S2 wird jeweils das Verhältnis

$$Rc = Cgrenz/Cmax$$

und

$$Rv = Vgrenz/Vmax$$

gebildet. Je größer dieses Verhältnis ist, desto weiter liegt also der maximal auftretende Strom- oder Geschwindigkeitswert (Cmax bzw. Vmax) von seinem Grenzwert (Cgrenz bzw. Vgrenz) entfernt.

In einem dritten Schritt S3 wird ein Faktor F bestimmt, der dem kleineren der beiden Verhältnisse Rc und Rv entspricht:

$$F = min(Rc, Rv)$$

In einem vierten Schritt S4 wird geprüft, ob der Faktor F ungefähr eins ist. Da dies bedeutet, daß einer der beiden Werte Cmax oder Vmax seinen Grenzwert Cgrenz bzw. Vgrenz in etwa erreicht hat, endet das Verfahren zum Festlegen der Intensität i1 des Rauschsignals e1 hier.

Ist der Faktor jedoch noch deutlich größer als eins, wird in einem fünften Schritt S5 die Intensität i1 um diesen Faktor F erhöht:

$$i1 := i1 * F$$

Mit dieser erhöhten Intensität i1 verzweigt das Verfahren wieder zum ersten Schritt S1 und beginnt von neuem. Auf diese Weise nähert sich die Intensität i1 schrittweise einem optimierten Wert, bei dem der Maximalwert Cmax, Vmax einer der limitierenden Parameter Strom bzw. Geschwindigkeit seinem Grenzwert Cgrenz bzw. Vgrenz nahe kommt. Dabei geht man davon aus, daß sich die Intensität i1 des Rauschsignals e1 und der jeweilige Maximalwert Cmax bzw. Vmax annähernd linear verhalten. Da diese Annahme nicht für beliebig große Faktoren F richtig sein kann, ist es sinnvoll, den Faktor F im fünften Schritt S5 zu begrenzen. Ein sinnvoller Wert könnte beispielsweise ein maximaler Faktor F von fünf sein.

Die Intensitäten i2 - i4 der übrigen Rauschsignale e2 - e4 werden auf analoge Weise iterativ optimiert.

Als limitierende Parameter kommen natürlich auch andere oder zusätzliche zugängliche Parameter des Zielsystems 2 in Frage. Wichtig ist nur, im dritten Schritt S3 das jeweils kleinste Verhältnis Rc, Rv zu bestimmen, um den Faktor F nicht zu groß werden zu lassen. Die Optimierung ist auch mit nur einem limitierenden Parameter möglich. Es kann außerdem natürlich mit Kehrwerten der oben definierten Verhältnisse Rc, Rv gearbeitet werden, dann muß als Faktor F der größere der beiden Werte verwendet werden, und die Intensität i1 - i4 der Rauschsignale e1 - e4 für den jeweils nächsten Iterationsschritt mit dem Faktor 1/F erhöht werden.

Zur Identifikation des Zielsystems 2 werden nun also nacheinander mehrere Rauschsignale e1 - e4 als Eingangssignal E an das Zielsystem 2 angelegt, die unterschiedliche Frequenzbereiche abdecken und unterschiedliche, optimierte Intensitäten i1 - i4 aufweisen. Die jeweiligen Ausgangssignale a1 - a4 werden dabei erfaßt. Durch das sequentielle Anlegen der Rauschsignale e1 - e4 kann die Intensität i1 - i4 in den einzelnen Frequenzbereichen höher sein als bei einer Identifikation, die wie im Stand der Technik alle Frequenzen mit einem einzigen Eingangssignal abdecken muß. Dies erhöht die Genauigkeit der Identifikation.

Aufgrund des Superpositionsprinzips können dann alle Rauschsignale e1 - e4 und alle dabei jeweils erhaltenen Ausgangssignale a1 - a4 addiert werden:

$$E = e1 + e2 + e3 + e4$$

und

$$A = a1 + a2 + a3 + a4$$

Aus der frequenzbezogenen Phasenverschiebung und Dämpfung zwischen dem auf diese Weise berechneten Eingangssignal E und Ausgangssignal A kann das zur Identifikation des Zielsystems 2 im geschlossenen Regelkreis gesuchte Bode-Diagramm ermittelt werden.

Zur Identifikation des Zielsystems 2 im offenen Regelkreis wird das Differenzsignal iol1 - iol4 für jedes Rauschsignal e1 - e4 ermittelt und die Summe gebildet:

$$IOL = iol1 + iol2 + iol3 + iol4$$

Wieder wird das gesuchte Bode-Diagramm aus der Phasenverschiebung und Dämpfung zwischen IOL und A ermittelt.

E, IOL und A werden also im beschriebenen Verfahren nicht unmittelbar durch ein Experiment ermittelt, sondern durch Superposition mehrerer Rauschsignale e1 - e4 bzw. Differenzsignale iol1 - iol4 und mehrerer zugehöriger Ausgangssignale a1 - a4 berechnet.

Ein alternativer Weg zur Identifikation des Zielsystems 2 besteht darin, daß für die Identifikation im geschlossenen Regelkreis die Bode-Diagramme für jedes Rauschsignal e1 - e4 (bzw. die Differenzsignale iol1 - iol4) und das dazugehörige Ausgangssignal a1 - a4 erstellt werden.

Es wird dann ein zusammengesetztes Bode-Diagramm erstellt, indem von jedem Bode-Diagramm für eines der Rauschsignale e1 - e4 nur ein Teil des Frequenzbereiches verwendet wird. So wird für das Rauschsignal e1 nach Figur 2 oder Figur 3 nur der Frequenzbereich von 0 Hz - 100 Hz des dazugehörigen Bode-Diagramms verwendet und mit dem Frequenzbereich von 100 Hz - 300 Hz des Bode-Diagramms des Rauschsignals e2 verbunden. Entsprechend liefern die Bode-Diagramme der Rauschsignale e3 und e4 die Bereiche 300 Hz - 1 kHz und 1 kHz - 3 kHz. Das derart zusammengesetzte Bode-Diagramm deckt dann den untersuchten Frequenzbereich vollständig ab.

Der Vorteil des beschriebenen Verfahrens besteht darin, daß Rauschsignale e1 - e4 mit Frequenzanteilen, die bis zum Zielsystem 2 einer starken Dämpfung unterliegen, mit einer höheren Intensität i1 - i4 eingespeist werden können. In diesen Bereichen ist die Identifikation des Zielsystems 2 dann genauer als in Verfahren, in denen nur ein Rauschsignal e1 - e4 verwendet wird, das den gesamten zu untersuchenden Frequenzbereich abdeckt und dabei keine Grenzwertverletzung im Zielsystem 2 auslösen darf.

Zusammenfassend sei anhand der Figur 5 noch einmal das Verfahren zur Identifikation des Zielsystems 2 beschrieben.

In einem Festlegungsschritt S10 werden die Intensitäten i1 - i4 ermittelt, mit denen jeweils Rauschsignale e1 - e4 als Eingangssignal E angelegt werden dürfen, so daß von den limitierenden Parametern wie Strom oder Geschwindigkeit keiner seinen jeweiligen Grenzwert Cgrenz bzw. Vgrenz überschreitet. Ein einfaches Verfahren hierfür wurde anhand der Figur 4 beschrieben. Die Rauschsignale e1 - e4 decken dabei für sich jeweils unterschiedliche Frequenzbereiche ab, zusammen decken die Rauschsignale e1 - e4 den zu untersuchenden Frequenzbereich ab.

In einem Ermittlungsschritt S20 werden die Rauschsignale e1 - e4 nacheinander als Eingangssignale E mit den in Schritt 10 ermittelten Intensitäten i1 - i4 angelegt und dabei jeweils das Ausgangssignal a1 - a4 erfaßt. Soll das Verhalten des Zielsystems 2 bei offenem Regelkreis untersucht werden, so wird zusätzlich das jeweils vorliegende Differenzsignal iol1 - iol4 erfaßt.

Die Schritte S10 und S20 können dabei nacheinander zunächst für e1 / i1 ausgeführt werden, dann für e2 / i2, e3 / i3 und e4 / i4, oder alternativ S10 zunächst für alle Rauschsignale e1 - e4, dann S20 für alle Rauschsignale e1 - e4 mit den in Schritt S10 bestimmten Intensitäten i1 - i4. In jedem Fall muß S20 für alle Rauschsignale e1 - e4 abgeschlossen sein, bevor zu Schritt S30 verzweigt werden kann.

Im Identifikationsschritt S30 wird nun aus den Rauschssignalen e1 - e4 bzw. den Differenzsignalen iol1 - iol4 und den Ausgangssignalen a1 - a4 das Bode-Diagram des Zielsystems im geschlossenen bzw. offenen Regelkreis bestimmt Dabei kann entweder anhand des Superpositionsprinzips jeweils die Summe aller Rauschsignale e1 - e4 bzw. die Summe aller Differenzsignale iol1 - iol4 und die Summe aller Ausgangssignale a1 - a4 betrachtet werden, oder für jedes angelegte Rauschsignal e1 - e4 ein eigenes Bode-Diagramm ermittelt werden. Die einzelnen Bode-Diagramme können dann wie oben erläutert in Frequenzbereiche zerlegt und zu einem zusammengesetzten Bode-Diagramm verbunden werden, das den zu untersuchenden Frequenzbereich vollständig abdeckt.

Anhand des Bode-Diagramms für das Zielsystem 2 im offen Regelkreis kann nun z.B. die Stabilität des untersuchten Antriebssystems 1 beurteilt werden bzw. bei Bedarf eine Optimierung der Reglerparameter im Zielsystem 2 vorgenommen werden.

Das Verfahren zur Identifikation eignet sich für unterschiedlichste Zielsysteme 2. Es muß nur jeweils gewährleistet sein, daß die Signale am Eingang und am Ausgang des Zielsystems sowie die limitierenden Parameter erfaßbar sind.

## Patentansprüche

1. Verfahren zur Analyse eines Antriebssystems (1), nach dem eine Übertragungsfunktion eines Zielsystems (2) innerhalb des Antriebssystems (1) bestimmt wird, indem Rauschsignale (e1, e2, e3, e4) an das Antriebssystem (1) angelegt werden, **dadurch gekennzeichnet, daß** nacheinander mehrere Rauschsignale (e1 - e4), die unterschiedliche Frequenzbereiche abdecken, als Eingangssignale (E) am Antriebsystem (1) angelegt werden.

2. Verfahren nach Anspruch 1, **dadurch gekennzeichnet, daß** die Rauschsignale (e1 - e4) unterschiedliche Intensitäten (i1 - i4) aufweisen

3. Verfahren nach Anspruch 2, **dadurch gekennzeichnet, daß** die Intensitäten (i1 - i4) optimiert werden, indem die Intensitäten (i1 - i4) schrittweise erhöht werden, bis ein Maximalwert (Cmax, Vmax) eines limitierenden Parameters des Antriebssystems (1) in der Nähe eines Grenzwerts (Cgrenz, Vgrenz) liegt.

4. Verfahren nach einem der Ansprüche 1 - 3, **dadurch gekennzeichnet, daß** die Rauschsignale (e1 - e4) aus Rauschen in mehreren Frequenzbändern bestehen, die beginnend bei einer immer gleichen unteren Grenzfrequenz, jeweils bei unterschiedlichen oberen Grenzfrequenzen enden, wobei das Eingangssignal (e4) mit dem breitesten Frequenzband einen zu untersuchenden Frequenzbereich vollständig abdeckt.

5. Verfahren nach einem der Ansprüche 1 - 3, **dadurch gekennzeichnet, daß** die Rauschssignale (e1 - e4) aus Rauschen in sich jeweils nicht oder nur wenig überlappenden Frequenzbereichen bestehen, die zusammen einen zu untersuchenden Frequenzbereich abdecken.

6. Verfahren nach einem der vorhergehenden Ansprüche, **dadurch gekennzeichnet, daß** zur Bestimmung der Übertragungsfunktion des Zielsystems (2) im geöffneten Regelkreis am Zielsystem (2) anliegende Differenzsignale (iol1 - iol4) und zugehörige Ausgangssignale (a1 - a4) herangezogen werden.

7. Verfahren nach Anspruch 6, **dadurch gekennzeichnet, daß** zur Bestimmung der Übertragungsfunktion des Zielsystems (2) jeweils eine frequenzabhängige Dämpfung und Phasenverschiebung zwischen den Differenzsignalen (iol1 - iol4) und den Ausgangssignalen (a1 - a4) bestimmt werden.

**Claims**

1. Method for analysing a drive system (1), according to which a transfer function of a target system (2) within the drive system (1) is determined by noise signals (e1, e2, e3, e4) being supplied to the drive system (1), **characterised in that** a plurality of noise signals (e1 - e4), which cover different frequency ranges, is supplied one after the other as input signals (E) to the drive system (1).

2. Method according to claim 1, **characterised in that** the noise signals (e1 - e4) have different intensities (i1 - i4).

3. Method according to claim 2, **characterised in that** the intensities (i1 - i4) are optimised by the intensities (i1 - i4) being increased stepwise until a maximum value (Cmax, Vmax) of a limiting parameter of the drive system (1) is near a limiting value (Clim, Vlim).

4. Method according to one of the claims 1 - 3, **characterised in that** the noise signals (e1 - e4) comprise noise in a plurality of frequency bands which, beginning at a lower limiting frequency which is always the same, end respectively at different upper limiting frequencies, the input signal (e4) with the widest frequency band completely covering a frequency range which is to be investigated.

5. Method according to one of the claims 1 - 3, **characterised in that** the noise signals (e1 - e4) comprise noise in frequency ranges not overlapping or only overlapping slightly respectively, which together cover a frequency range which is to be investigated.

6. Method according to one of the preceding claims, **characterised in that**, in order to determine the transfer function of the target system (2) in the open-loop, difference signals (iol1 - iol4) supplied to the target system (2) and associated output signals (a1 - a4) are used.

7. Method according to claim 6, **characterised in that**, in order to determine the transfer function of the target system (2), a frequency-dependent attenuation and phase shift respectively between the difference signals (ioll - iol4) and the output signals (a1 - a4) are determined.

**Revendications**

1. Procédé d'analyse d'un système d'entraînement (1), selon lequel une fonction de transfert d'un système cible (2) à l'intérieur d'un système d'entraînement. (1) est déterminée en appliquant des signaux de bruit (e1, e2, e3, e4) au système d'entraînement (1), **caractérisé en ce que** plusieurs signaux de bruit (e1 - e4) couvrant les différentes plages de fréquences sont appliqués en tant que signaux d'entrée (E) du système d'entraînement (1).

2. Procédé selon la revendication 1, **caractérisé en ce que** les signaux de bruit (e1 - e4) présentent des différentes intensités (i1 - i4).

3. Procédé selon la revendication 2, **caractérisé en ce que** les intensités (i1 - i4) sont optimisées en étant augmentées pas à pas jusqu'à ce qu'une valeur maximale (Cmax, Vmax) d'un paramètre limitant du système d'entraînement (1) se trouve à proximité d'une valeur limite (Cgrenz, Vgrenz).

4. Procédé selon une des revendications 1 à 3, **caractérisé en ce que** les signaux de bruit (e1 - e4) sont constitués de bruits de plusieurs bandes de fréquences qui, en commençant à une fréquence limite inférieure toujours identique, se terminent à des fréquences limites supérieures à chaque fois différentes, le signal d'entrée (e4) avec la bande de fréquences la plus large couvrant complètement une plage de fréquences à analyser.

5. Procédé selon une des revendications 1 à 3, **caractérisé en ce que** les signaux de bruit (e1 - e4) sont constitués de bruits appartenant à des plages de fréquences à chevauchement mutuel nul ou faible qui couvrent ensemble une plage de fréquences à analyser.

6. Procédé selon une des revendications précédentes, **caractérisé en ce que**, pour déterminer la fonction de transfert du système cible (2) dans le circuit de régulation ouvert, on fait appel à des signaux différentiels (iol1 - iol4) appliqués au système cible (2) et à des signaux de sortie associés (a1 - a4).

7. Procédé selon la revendication 6, **caractérisé en ce que**, pour déterminer la fonction de transfert du système cible (2), on détermine respectivement un amortissement et un déphasage en fonction de la fréquence entre les signaux différentiels (iol1 - iol4) et les signaux de sortie (a1 - a4).

FIG. 1

## FIG. 2

## FIG. 3

FIG. 4

```
        ╭─────────────╮
        │    START    │
        ╰──────┬──────╯
               │
               ▼
     ┌──────────────────┐
     │                  │──── S1
     └────────┬─────────┘
              │
              ▼
     ┌──────────────────┐
     │                  │──── S2
     └────────┬─────────┘
              │
              ▼
     ┌──────────────────┐
     │                  │──── S3
     └────────┬─────────┘
              │                    S4
              ▼                  ╭──────────╮
            ◇────────────────────│   END    │
              │                  ╰──────────╯
              ▼
     ┌──────────────────┐
     │                  │──── S5
     └──────────────────┘
```

FIG. 5

```
     ┌──────────────────┐
     │                  │──── S10
     └────────┬─────────┘
              │
              ▼
     ┌──────────────────┐
     │                  │──── S20
     └────────┬─────────┘
              │
              ▼
     ┌──────────────────┐
     │                  │──── S30
     └──────────────────┘
```